(19) Europäisches Patentamt / European Patent Office / Office européen des brevets

(11) EP 2 249 972 B1

(12) **EUROPÄISCHE PATENTSCHRIFT**

(45) Veröffentlichungstag und Bekanntmachung des Hinweises auf die Patenterteilung:
**23.12.2015 Patentblatt 2015/52**

(21) Anmeldenummer: **09715376.1**

(22) Anmeldetag: **18.02.2009**

(51) Int Cl.:
**B05D 7/14** (2006.01)   **B60S 1/38** (2006.01)

(86) Internationale Anmeldenummer:
**PCT/EP2009/001117**

(87) Internationale Veröffentlichungsnummer:
**WO 2009/106250 (03.09.2009 Gazette 2009/36)**

(54) **VERFAHREN ZUM HERSTELLEN VON FEDERSCHIENEN FÜR SCHEIBENWISCHER**

METHOD FOR THE PRODUCTION OF SPRING-LOADED RAILS FOR WINDSHIELD WIPERS

PROCÉDÉ DE FABRICATION DE LAMES FLEXIBLES POUR DES ESSUIE-GLACES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **29.02.2008 DE 102008012083**
**19.03.2008 DE 102008014938**

(43) Veröffentlichungstag der Anmeldung:
**17.11.2010 Patentblatt 2010/46**

(73) Patentinhaber: **Zapp Precision Metals GmbH**
**58239 Schwerte (DE)**

(72) Erfinder:
• **CASTRO, Victor**
**58730 Fröndenberg-Frömern (DE)**
• **PACHER, Oskar**
**A-8041 Graz (AT)**

(74) Vertreter: **Tilmann, Max Wilhelm et al**
**König-Szynka-Tilmann-von Renesse**
**Patentanwälte Partnerschaft mbB**
**Postfach 11 09 46**
**40509 Düsseldorf (DE)**

(56) Entgegenhaltungen:
**DE-A1- 10 333 082   GB-A- 1 363 627**

EP 2 249 972 B1

**Beschreibung**

Die Erfindung bezieht sich auf ein Verfahren zum Herstellen von Federschienen aus Stahl, insbesondere für Scheibenwischer mit einem Gummi oder Elastomerwischerblatt.

Bekannte Scheibenwischer für Kraftfahrzeuge bestehen aus einem Wischarm, der auf einer Wischerwelle gelagert ist und von einem Wischermotor angetrieben wird. Am feien Ende des Wischarmes befindet sich eine Federschiene mit einem aus Gummi bestehenden, oftmals gelenkig befestigten Wischerblatt mit einer Wischerlippe, der die Aufgabe zukommt, die Fahrzeugscheibe von anhaftendem Wasser und/oder Schmutz zu befreien.

Für eine zufriedenstellende Funktion des Wischerblattes ist es entscheidend, daß die Wischerlippe im Betrieb unter möglichst konstantem Anpreßdruck über die in der Regel gekrümmte Fahrzeugscheibe gleitet. Die Krümmung der Federschiene und damit die Krümmung der Wischerlippe soll sich dabei unter Betriebsbedingungen so einstellen, daß diese über ihre ganze Länge, insbesondere aber an ihren Enden, mit ausreichendem Druck auf der zu reinigenden Glasscheibe liegt.

Insbesondere bei hohen Fahrgeschwindigkeiten, vermindern aber häufig Fahrwindturbulenzen eine konstante Anpreßkraft über die ganze Wischerlänge, insbesondere im Bereich einer stärkeren Scheibenkrümmung.

Um den Anpreßdruck des Wischerblattes auch bei hohen Fahr- und/oder Windgeschwindigkeiten aufrechtzuerhalten ist es erforderlich, das Wischerblatt durch die Federschiene an die Scheibe anzupressen. So ist es beispielsweise bekannt, eine oder auch zwei Federschienen in seitliche Nuten oder mittig in das Wischerblatt einzulegen.

Aufgrund der federelastischen Eigenschaften der Federschiene können ferner Schwingungen auftreten, insbesondere Eigen- und Resonanzschwingungen, die zum teilweisen Abheben der Wischerlippe führen, wodurch sich die Sichtverhältnisse der Fahrzeugscheibe erheblich verschlechtern werden.

Aus der deutschen Offenlegungsschrift 2 153 809 ist bereit ein Verfahren zum behandeln von Kraftfahrzeug-Karosserieteilen aus Stahl bekannt, bei dem die betreffenden Teile zunächst galvanisch verzinkt und sodann mit einer Phosphatlösung, das heißt einer keine Metalle bzw. Metallverbindungen enthaltenden Lösung behandelt werden, um so auf der Zinkschicht eine Zink/Phosphatschicht zu erzeugen und diese dann mit einer eingebrannten Deckschicht auf Basis Epoxydharz, Acrylharz oder Alkydharz zu versehen.

Desweiteren beschreibt die deutsche Offenlegungsschrift 103 33 082 A1 ein Wischerblatt für Fahrzeugscheiben mit zumindest einer Federschiene, deren Oberfläche zumindest im Bereich der Befestigung eines aus Kunststoff bestehenden Adapters zum Befestigen des Wischerblatts an dem Wischarm mit einer Pulverbeschichtung versehen und der Adapter der beschichteten Federschiene beispielsweise durch Reibschweißen mit der beschichteten Federschiene verbunden wird.

Zur Verbesserung des Schwingungsverhaltens von Wischerblättern schlägt die PCT-Offenlegungsschrift WO 01/58732 A1 vor, zwei Federschienen zu verwenden, die sich hinsichtlich ihrer Resonanzfrequenzen als Folge ihrer unterschiedlichen Breite oder Dicke oder auch hinsichtlich ihrer Werkstoffzusammensetzung voneinander unterscheiden. Damit soll ein ruhigerer Wischbetrieb möglich sein. Nachteilig ist dabei jedoch, daß das Schwingungsverhalten nur für wenige ganz bestimmte Frequenzen vermindert wird und sich die in der Praxis auftretenden wechselnden Betriebs- und Schwingungszustände nicht zufriedenstellend beseitigen lassen. Hinzu kommt, daß die Verwendung unterschiedlicher Federschienen eine aufwendige Montage erfordert und gleichzeitig höhere Lagerhaltungskosten verursacht.

Das bei Scheibenwischern unerwünschte elastische Schwingen ist generell auf die geringe Dämpfung der für Federschienen verwendeten Federstähle zurückzuführen. Es hat seine Ursache darin, daß im Stahl nur wenige Energie verzehrende Prozesse ablaufen. Bei Scheibenwischern ist dies nachteilig und ungünstig, da es zu Rattererscheinungen führen kann. Diese können beim Betrieb stark stören, die Lebensdauer der Wischerleiste vermindern und stellen auch ein Sicherheitsrisiko dar.

Untersuchungen haben gezeigt, daß sich das Schwingungsverhalten von Federschienen bei Scheibenwischern durch das Gummi des Wischerblattes dämpfen läßt. Allerdings gelingt dies nur dann zufriedenstellend, wenn zwischen dem Gummi des Wischerblatts und der Federschiene - zumindest örtlich an bestimmten Stellen - ein möglichst enger kraftschlüssiger Kontakt oder ein Verbund besteht. Das Einlegen der Federschiene in Ausnehmungen oder Führungsnuten des Wischerblatts bewirkt jedoch in der Regel keine zureichende Dämpfung von Schwingungen, da die Federschiene auch eingebettet immer noch Schwingungsfreiheitsgrade aufweist. In der Praxis kann es dann zu Relativbewegungen zwischen der Federschiene und dem Wischerblatt kommen, so daß bei hohen Fahrgeschwindigkeiten oder bei Windturbulenzen kein gleichmäßiges Wischen möglich ist. Das Ergebnis sind unerwünschte und störende Ratterschwingungen, die sich besonders bei höheren Fahrgeschwindigkeiten negativ auswirken.

Hier will nun die Erfindung Abhilfe schaffen und schlägt daher als Federschiene für Scheibenwischer ein mehrlagig beschichtetes Federelement vor. Dabei sollte sich die Federschiene auf einfache und kostengünstige Weise kraftschlüssig mit dem Wischerblatt zu einem Verbundteil verarbeiten lassen, das ohne Ausstanzungen zum Fixieren der Federschiene auskommt.

Die Erfindung setzt sich daher ferner zum Ziel, die Oberfläche der Federschiene so zu gestalten, daß sie einen kraftschlüssigen Verbund zum Wischerblatt ermöglicht.

Die Lösung dessen besteht in einem Verfahren der eingangs erwähnten Art, bei dem ein kaltgewalzter Federschienenrohling aus vorzugsweise kaltgewalztem Stahl mit einer Zinkschicht als Grundschicht versehen, sodann eine zinkhaltige Ankerschicht durch eine Reaktion des Zinks mit sauerstoffreichen Metallverbindungen einer Oxidationsstufe von mindestens 3 erzeugt sowie auf die Ankerschicht eine Deckschicht aus einem polymerisierbaren Pulverlack aufgebracht und teilweise gehärtet wird. Dabei kann die Deckschicht aus einem Polyester bestehen, der mit Acrylester, Polyamid, Polybutylenterephthalat, Polycarbonat, Acrylnitril-Butadien-Styrol, Polyethylenterephthalat, Polypropylen, Polystyrol, Polysulfon oder Polyestercarbonat und dem Wischerblatt verschweißbar ist. In Frage kommen für die Deck-schicht auch in CHCl$_3$ (Trichlormethan bzw. Chloroform) zumindest teilweise lösliche Stoffe. Die Zinkschicht kann bis 15% Nickel, Eisen und Kobalt einzeln oder nebeneinander enthalten.

Die Erfindung schlägt mithin eine Verbindung durch drei Schichten zwischen der Federschiene einerseits und dem Wischerblatt andererseits vor, einer Zinkschicht als Grundschicht, einer zinkhaltigen Ankerschicht und einer in CHCl$_3$ teilweise löslichen Deckschicht.

Die Ankerschicht aus Zinkverbindungen läßt sich im Wege einer Tauch- oder Sprühbehandlung der Federschiene mit ihrer Zinkschicht herstellen. So kann die beschichtete Federschiene durch ein Bad mit einer Lösung der Ankermoleküle geführt oder mit einer solchen Lösung besprüht werden. Dabei bildet sich zwischen der Zinkschicht und den aufgebrachten Ankermolekülen im Wege einer chemischen Reaktion eine stabile Schicht aus Zinkverbindungen als Ankerschicht aus, von der lediglich noch die Reste der Lösung entfernt zu werden brauchen. Dabei bleibt die durch chemische Reaktionen des Zinks mit der Lösung entstandene Ankerschicht erhalten. Als Ankermoleküle eignen sich Zinkverbindungen der Elemente Eisen, Nickel, Chrom, Vanadium, Titan, Zirkonium, Molybdän und Silizium.

Die Erfindung basiert auf der überraschenden Feststellung, daß das Verschweißen oder Verbinden von Pulverlackschichten mit Elastomeren und/oder Thermoplasten beispielsweise mittels Ultraschall möglich ist, obgleich ein ausgehärteter Pulverlack ein hoch vernetztes drei-dimensionales System von Kohlenstoffketten ist und quasi als "Riesenmolekül" vorliegt. Dieses "Riesenmolekül" hat praktisch keine Möglichkeiten mehr, Reaktionen oder chemische Bindungen einzugehen, weshalb solche Lackschichten unter Umweltbedingungen auch sehr stabil sind. Ein solcher Lack läßt sich auch nicht mehr örtlich aufschmelzen, um eine flüssige Phase zu bilden, was für ein Verschweißen, beispielsweise ein Ultraschallschweißen aber eine wichtige Voraussetzung wäre.

Beim Ultraschallschweißen wird bekanntlich in der Kontaktzone zu einem zweiten Werkstoff durch Schwingungen Reibungswärme erzeugt, die bis zu 200°C und darüber gehen kann. Diese Temperatur bewirkt in der Regel ein Schmelzen von weniger vernetzten, vorwiegend geradkettigen Molekülen, wobei sich eine dünne Schmelzflüssigkeit ausbildet, die eine Verbindung zu einem anderen Polymerwerkstoff ermöglicht. Bei einer ausgehärteten Pulverlackschicht ist dies jedoch nicht möglich, da die "Riesenmoleküle" voll vernetzt sind und nicht aufschmelzen.

Überraschend hat sich nun gezeigt, daß ein Vibrations-, insbesondere Ultraschallschweißen von Pulverlackschichten dann möglich ist, wenn die Lackschicht nur teilgehärtet ist. Im Falle eines nicht vollständigen Aushärtens verbleiben nämlich vorwiegend geradkettige Moleküle im "Riesenmolekül" zurück, die als teilkristalline thermoplastische Phasen die Fähigkeit besitzen, unter dem Einfluß von Ultraschall zu schmelzen und zu reagieren.

Entscheidend ist dabei die Möglichkeit, einen notwendigen Anteil an thermoplastischen bzw. niedrigmolekular verbliebenen Komponenten in der teilweise gehärteten Deckschicht einzustellen. Die Erfindung zeigt dafür als Nachweis einen Weg in Gestalt der Löslichkeit bzw. des Quellvermögens in Chloroform (CHCl$_3$) auf. Die richtige Einstellung ist über eine photometrische Bestimmung der löslichen Anteile möglich. Eine weitere Möglichkeit besteht darin, das Quellverhalten in Chloroform zu bestimmen, wobei das osmotische Eindringen des Lösungsmittel in die gehärtete Deckschicht ein bestimmtes Mindestmaß an Quellung voraussetzt, was das erfindungsgemäße Quellmaß Q zum Ausdruck bringt.

Die blanke Federschiene ist somit dreilagig beschichtet, wobei die Deckschicht so beschaffen ist, daß sie sich mit dem Wischerblatt durch mechanische Schwingungen verschweißen läßt. Dazu eignet sich das Vibrationsschweißen bei niedrigen Schwingungsfrequenzen oder das Ultraschallschweißen. Diese Verfahren zeichnen sich durch eine zeitlich kurze Einwirkungsdauer aus, was ein rasches Verbinden bei gleichzeitig niedrigen Kosten ermöglicht. Dies ist allerdings nur dann möglich, wenn die Federschiene erfindungsgemäß beschichtet ist. Ein formschlüssiger Verbund mit einer Federschiene ist dabei mit Kunststoffen, die das Wischerblatt umschließen oder durchdringen, möglich. Ein Vulkanisieren ist hingegen - aus Kostengründen - weniger geeignet.

Die Federschiene besteht vorzugsweise aus einem federelastischen Stahl mit

| | |
|---|---|
| 0,40 bis 0,80% | Kohlenstoff |
| 0,15 bis 1,80% | Silizium |
| 0,40 bis 1,80% | Mangan |
| 0,01 bis 2% | Chrom |
| 0,001 bis 2% | Vanadium |

Rest Eisen einschließlich erschmelzungsbedingter Verunreinigungen.

Sie wird vorzugsweise im vergüteten oder patentierten und kalt nachgezogenen Zustand mit einer Zugfestigkeit von 1400 bis 2100 N/mm$^2$ eingesetzt. Das Vergüten kann aus einem 10 bis 30 Sekunden dauernden Glühen bei 850°C mit anschließendem Abkühlen und einem Anlassen bei 350 bis 450°C bestehen.

Eine Ultraschallschweißanlage besteht aus einer kleinen Presse, die den Anpreßdruck zwischen den miteinander zu verschweißenden Werkstoffen und der die Schwingung übertragenden Sonitrode liefert. Weitere Komponenten sind der Schallkopf zur Erzeugung der Schwingungen und ein Transformationsstück, das mit der Sonitrode die Schwingungen auf die miteinander zu verschweißenden Teile überträgt.

Typische Schwingungsfrequenzen beim Ultraschallschweißen liegen bei 20 bis 60 kHz, beim Vibrationsschweißen bei 200 bis 400 Hz. Beim Ultraschallschweißen wird eine Oberflächenschicht der Federschiene durch Reibung bzw. Schwingungsbewegungen in der Grenzzone zum Wischerblatt kurzzeitig erhitzt. Dadurch entsteht ein Schmelzverbund, da einzelne Komponenten des Lacks aufschmelzen. Dieser Verbund ist aber nur dann haltbar, wenn die Haftung der Oberflächenschicht sowie jene der darunter befindlichen Beschichtungen untereinander und zum Stahl der Federschiene gut ist. Andernfalls kann es unter der Wirkung der Schwingungsenergie auch zu Schichtablösungen kommen. Dabei hat sich herausgestellt, daß es zur Vermeidung von Schichtablösungen sowie für einen brauchbaren Verbund einer mehrlagigen Beschichtung unter Einbeziehung einer Schicht mit Ankermolekülen bedarf. Die Schichten besitzen vorzugsweise eine Gesamtdicke von unter 200 $\mu$m und die Deckschicht einen in CHCl$_3$ löslichen und/oder quellenden Anteil, dessen Grenzen sich durch Messen der Extinktion E oder des Quellmasses Q feststellen läßt. Unter diesen Bedingungen läßt sich die Deckschicht mit anderen Kunststoffen oder Thermoplasten derart verschweißen, daß sich das Wischerblatt mit der Federschiene form- und kraftschlüssig verbindet. Umfangreiche Versuche haben gezeigt, daß der Scheibenwischer eine erfindungsgemäße Federschiene mit einer Grundschicht aus Zink und zwei weitere Schichten, eine Ankerschicht und eine Deckschicht, aufweisen muß. Diese Schichten sind so aufeinander abgestimmt, daß sie einen möglichst guten Korrosionsschutz für die Federschiene bieten und gleichzeitig unter der Einwirkung mechanischer Schwingungen beständig sind.

Die Erfindung wird nachfolgend anhand von Ausführungsbeispielen und Zeichnungen des näheren erläutert. In der Zeichnung zeigen:

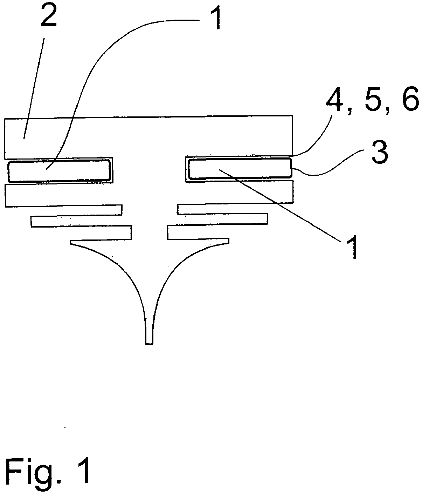

Fig. 1    Querschnitte durch ein Wischerblatt mit einer Federschiene,

Fig. 2    die Prinzipskizze eines Teils der Federschiene mit einer Beschichtung im Querschnitt,

Fig. 3    das Schliffbild eines Teils der Federschiene mit der Beschichtung im Querschnitt,

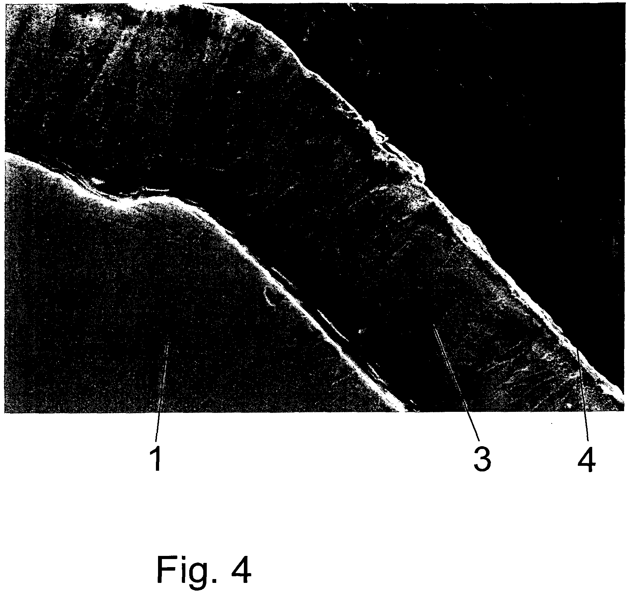

Fig. 4    einen vergrößerten Querschnitt eines Teils der Federschiene mit der Beschichtung,

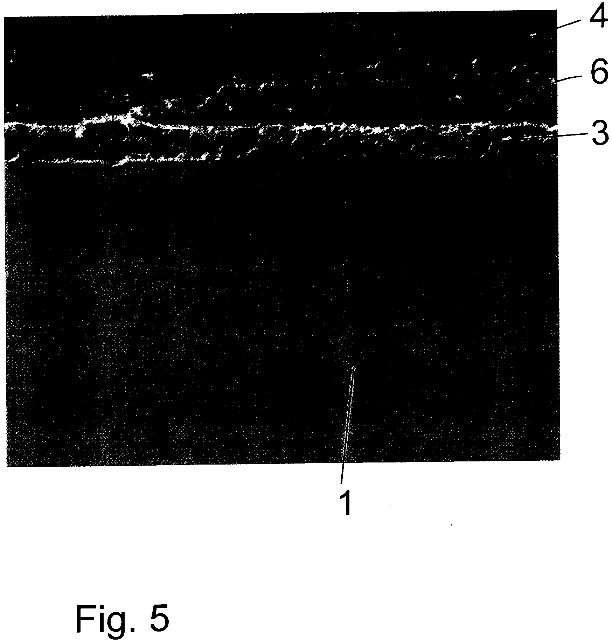

Fig. 5    einen vergrößerten Querschnitt eines Teils einer Federschiene mit einer schlechten Schichthaftung,

Fig. 6    eine Veranschaulichung des Quellmasses und

Fig. 7    die Aufnahme einer Probe zur Veranschaulichung des Quellverhaltens einer mit CHCl$_3$ behandelten Probe.

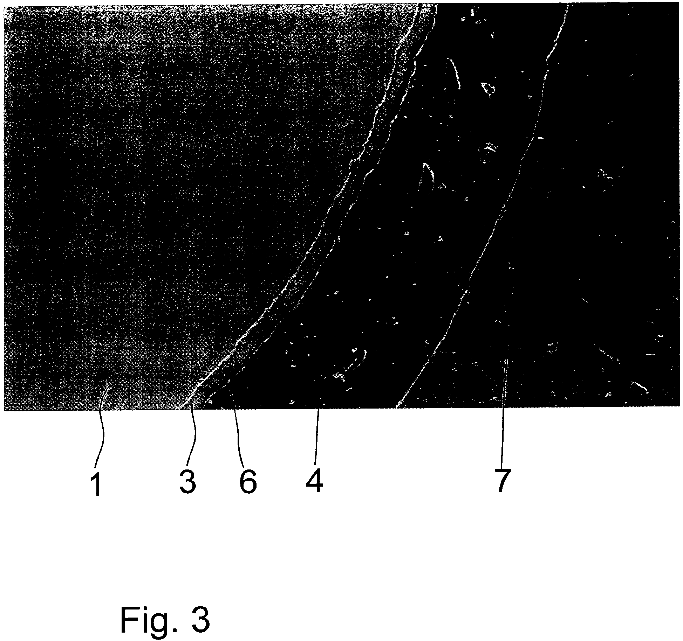

Die erfindungsgemäße Federschiene 1 besteht aus Stahl und ist mit einem üblichen Wischerblatt 2 versehen. Die Federschiene 1 weist insgesamt drei Schichten auf, eine Grundschicht 3 aus Zink, eine Deckschicht 4 mit in CHCl$_3$ löslichen teilkristallinen Komponenten 5 und eine dazwischenliegende Reaktions- bzw. Ankerschicht 6 aus Ankermolekülen in einer üblichen Bettungsmasse 7 (Fig. 3), die lediglich zum Einbetten der Probe dient.

Die Grundschicht 3 besteht aus Zink oder einer Zinklegierung mit bis 15% Nickel, Eisen und Kobalt einzeln oder nebeneinander. Sie wird galvanisch in einem elektrolytischen Bad direkt auf die Oberfläche der metallischen Federschiene 1 aufgebracht. Die Grundschicht 3 besitzt eine Dicke d 1 von 2 bis 20 $\mu$m, vorzugsweise von 3 bis 10 $\mu$m.

Das Zink enthält in der Ankerschicht 6, d.h. im Übergangsbereich zur Deckschicht 4 sauerstoffreiche Ankerverbindungen, denen die Aufgabe zukommt, die Schichten 3 und 4 durch molekulare Kräfte miteinander zu verbinden bzw. zu verankern.

Als Ankermoleküle dienen Zink-Verbindungen der Elemente Eisen, Nickel, Chrom Vanadium, Titan, Zirkonium, Molybdän und Silizium vorzugsweise mit einer Oxidationsstufe von mindestens 3 einzeln oder nebeneinander. Zu diesen Verbindungen zählen z.B. Chromate, Vanadate, Titanate, Zirkonate und Molybdate sowie die dazugehörigen Säuren, die bei einem pH-Wert von etwa 1 bis 3 besonders wirksam sind. Die Ankermoleküle bilden in einer Oberflächenzone der Zinkschicht 3 mit Zinkatomen stabile Verbindungen und decken die Oberfläche der Zinkschicht mit einer sehr dünnen Reaktionsschicht 6, beispielsweise aus Zinkchromat oder Zinkmolybdat ab. Fehlt diese Reaktionsschicht 6 bzw. fehlen diese Ankermoleküle, so ist das Gesamtergebnis schlecht (Vers. Nr. 19, 20). Die Bildung der Reaktionsschicht 6 geschieht in situ durch Eintauchen und/oder Besprühen der zinkbeschichteten Federschiene 1, 3 mit einer Lösung der Ankermoleküle. Danach wird die Oberfläche mit Wasser gespült und getrocknet.

Als weitere Schicht wird schließlich eine Deck- bzw. Oberflächenschicht 4 mit einer Schichtdicke d 2 von 20 bis 200 $\mu$m vorzugsweise von 30 bis 120 $\mu$m aufgebracht.

Die Deckschicht 4 besteht aus einem durch Strahlung und/oder Temperatur gehärteten Pulverlack. Dieser wird jedoch nur soweit gehärtet, daß beispielsweise ein mittels $CHCl_3$ extrahierbarer löslicher Restanteil 5 im Kohlenstoffkettengerüst 8 verbleibt bzw. ein Quellmaß Q von vorzugsweise über 1,1 gewährleistet ist. Dadurch erhält die Deckschicht die Eigenschaft, sich mittels Ultraschall mit Gummi, Thermoplasten oder Elastomeren verschweißen zu lassen. Würde hingegen der Pulverlack voll ausgehärtet, bestünde keine Möglichkeit, diesen mit Elastomeren oder Thermoplasten zu verschweißen. Erfindungsgemäß findet daher nur eine Teilhärtung des Pulverlacks statt.

Für die Menge des löslichen Restanteils im teilgehärteten Pulverlack gibt es im Hinblick auf eine optimale Beschichtung neben dem Quellmaß eine obere und eine untere Grenze. Die Grenzwerte sind durch die Extinktion bestimmt:

$$E = - \log I_o/I = - \log T.$$

Mit $I_o$ als einfallende Strahlung und I als austretende Strahlung (nach dem Durchqueren des Mediums bzw. der Beschichtung) beschreibt die Extinktion E als logarithmische Größe die Transmission T bei einer bestimmten Wellenlänge $\lambda$. Der Anteil der durchgelassenen Strahlung wird als Transmissionsgrad bezeichnet. Die Abschwächung setzt sich im allgemeinen zusammen aus Absorption, Streuung, Beugung und Reflexion und ist wellenlängenabhängig. Die Extinktion ist der negative dekadische Logarithmus des Transmissionsgrades. Die Extinktion E ist ein Maß für den gelösten, d.h. nicht gehärteten Lackanteil. Je höher der Zahlenwert der Extinktion ist, desto größer ist der lösliche Anteil.

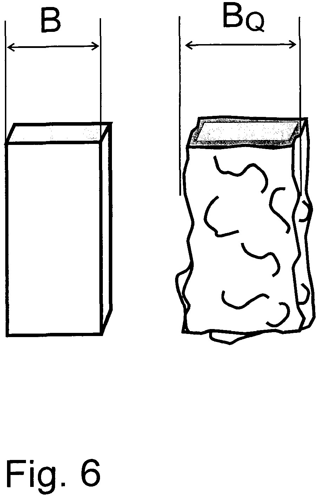

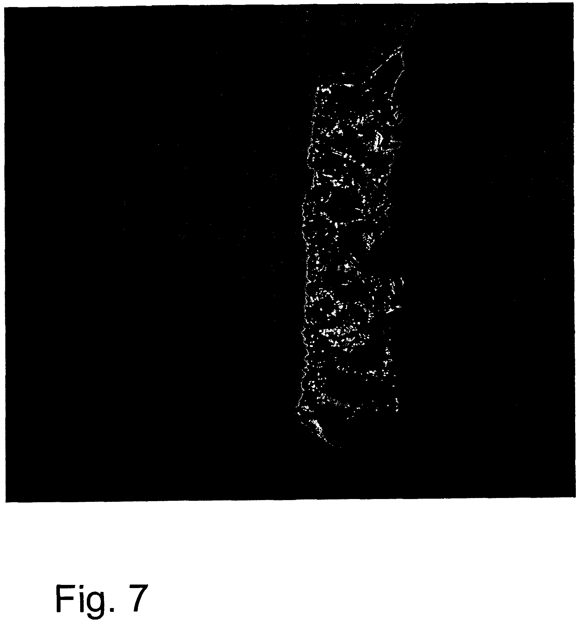

Kennzeichnend für die Menge des löslichen Restanteils ist des weiteren das osmotische Quellverhalten, das darauf beruht, daß die nicht vernetzten Komponenten bei einem Quellversuch (Fig. 6, 7) mit Hilfe von Chloroform ($CHCl_3$) als Lösungsmittel verdünnt werden, was zum Aufbau eines Innendrucks und demzufolge zu einem Quellen, d.h. zu einer Volumenzunahme führt.

Das Ausmaß dieser Volumenzunahme bringt das Quellmaß

$$Q = B_Q/B$$

zum Ausdruck, worin $B_Q$ die Breite einer beschichteten Federschiene nach einem fünfminütigen Quellen in Chloroform bei Raumtemperatur und B das Ausgangsmaß der unbehandelten Probe ist, wie das in Fig. 6 schematisch dargestellt ist.

Das Quellmaß liegt vorzugsweise über 1,1 und beträgt beispielsweise 1,5 oder auch 1,7.

Zahlenwerte ergeben sich aus der Versuchsbeschreibung und sind der folgenden Tabelle zu entnehmen. Die Messungen wurden bei einer Wellenlänge von 340 nm durchgeführt.

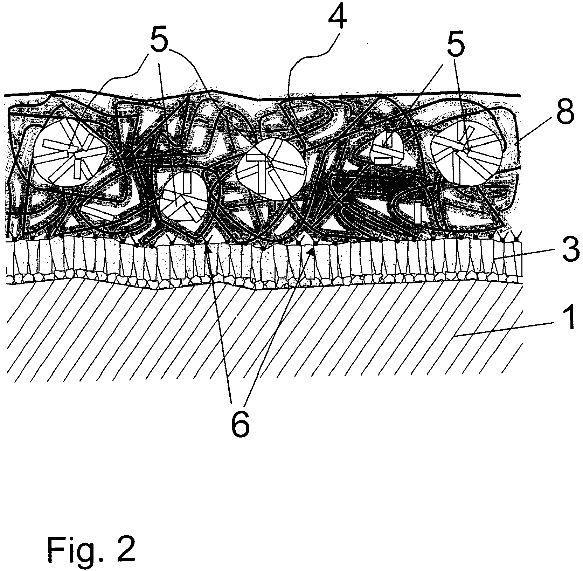

Günstige Eigenschaften ergeben sich, wenn die Extinktion 1,2 bis 2,8 beträgt. Ist die Extinktion und damit die Löslichkeit des Restanteils im Kohlenstoffkettengerüst in $CHCl_3$ höher, so ergeben sich schlechtere Gebrauchseigenschaften, die darin begründet sein dürften, daß das Aufnahmevermögen der Deckschicht für Wasser bzw. Feuchtigkeit zu groß ist. In diesem Fall liegt nämlich eine weniger dichte Vernetzung der Kohlenstoffkette der Deckschicht vor, was das Eindringen von Wasser und Feuchtigkeit begünstigt und zu Korrosion der Federschiene führen kann (Vers. Nr. 14, 15, 16). Liegt hingegen die Extinktion unterhalb des unteren Grenzwertes von 1,2 (Vers. Nr. 8, 18, 23, 25), ist die Deckschicht zu stark gehärtet und ihre Verbindung mit dem Wischerblattmaterial mittels Ultraschall schließlich nicht mehr möglich, da die in Fig. 2 mit 5 gekennzeichneten, noch thermoplastischen Substanzen fehlen.

Bei Versuchen wurden kaltgewalzte und gereinigte Stahlproben einer Breite von 7,0 und einer Dicke im vergüteten oder patentierten Zustand in einem galvanischen Bad unter Laborbedingungen mit einem handelsüblichen Zn-Salz unter Zugabe von Borsäure und NaOH, bei einer Badtemperatur von 60°C und einer Stromstärke von 10 A mit Zink beschichtet (Vers. Nr. 1 bis 20).

Zur Bestimmung des Einflusses der Schichtdicke d 1 auf die Eigenschaften der Proben, wurde die Einwirkungsdauer variiert, wobei sich Schichtdicken von 2 bis 10 $\mu$m ergaben.

In einer zweiten Versuchsserie wurden die gereinigten Stahlproben sodann in einem sauren Elektrolyten bei einen pH-Wert von 2,8 mit einer Grundschicht aus Zink/Nickel versehen (Vers. Nr. 21 bis 23).

Für die Deckschicht 3 wurde ein handelsüblicher, durch Strahlung härtbarer schwarzer Pulverlack verwendet, der mit einer elektrostatischen Pistole auf die Oberfläche der Proben aufgetragen wurde. Die Proben 1 bis 25 wurden danach mit IR-Strahlen in einer Kammer im Wellenlängenbereich von 0,7 bis 4$\mu$m jeweils 0,1 bis 3 Minuten gehärtet. Bei einer weiteren Versuchsrehe wurden Proben mit einem IR+UV-Strahlengemisch gehärtet (Vers. Nr. 21 bis 23).

Zur Beurteilung der Schichthaftung und der Langzeitstabilität wurden die Proben einem Salzsprühtest nach DIN 50021 unterworfen und die Oberfläche nach jeweils 100 bzw. 200 Stunden Auslagerung optisch nach einer Güteskala mit 1 bis 5 bewertet. Frühausfälle infolge Schichtablösung sind in der Tabelle mit "neg" gekennzeichnet. Dazu ergänzend wurden Auslagerungsversuche in gesättigter NaCl-Lösung in einem Ultraschallbad durchgeführt und die Proben sodann visuell bewertet. Diese Versuche sollten aufzeigen, ob die Schichthaftung unter der Einwirkung von Schwingungen ausreichend ist. In einer weiteren Versuchsserie wurde die Haftung zwischen der Zink-Schicht und der Deckschicht durch die Ankerverbindungen der Anker- bzw. Reaktionsschicht 4 verbessert. Der Einbau von Ankerverbindungen in eine Oberflächenzone der Grundschicht wurde dabei durch Eintauchen der Proben in eine wässrige Lösung bewirkt, die $K_2CrO_4$, $Na_2VO_4$, $CrO_3$ und $Na_2MoO_4$ in einer Konzentration von je 0,5m/l bei einem pH-Wert von 2,5 enthielt. Als Folge der Tauchbehandlung veränderte sich die Zink-Oberfläche farblich, was ein Hinweis auf eine Verbindungsbildung ist. Die Proben dieser Serie wurden danach mit Wasser bespült, mit Warmluft getrocknet und mit einem Lackpulver beschichtet.

Um die Eignung der Deck- bzw. Pulverlackschicht 4 für ein Verschweißen mit Elastomeren und Thermoplasten zu bewerten, wurde der $CHCl_3$-lösliche Anteil des gehärteten Pulverlacks bzw. die zu diesen Wert proportionale Größe der Extinktion E sowie des Quellmasses Q bestimmt. Dazu wurde jeweils ein Probestück mit einer Lackoberfläche von 4 cm$^2$ in 10 ml des Lösungsmittels $CHCl_3$ gelegt. Nach einer Einwirkungsdauer von einer halben bis einer Stunde lösten sich die nicht vernetzten thermoplastischen Komponenten der Lackschicht unter Volumenzunahme und traten in das Lösungsmittel ein. Dieses verfärbte sich dabei, wobei das Ausmaß der Verfärbung ein Hinweis dafür ist, wie vollständig bzw. wie unvollständig die Härtung bzw. Polymerisation ist. Das Ausmaß der Verfärbung bzw. die Lichtabsorption wurde mit einem Photometer bei einer Wellenlänge von 340 nm und einem Küvettenquerschnitt von 1 cm$^2$ (Behälterquerschnitt) gemessen. Die Meßergebnisse sind in der Tabelle unter "E" eingetragen. Es hat sich gezeigt, daß ein E-Wert von 1,2 bis 2,6 vorteilhaft ist, um eine hinreichende Korrosionsbeständigkeit zu gewährleisten.

Parallel zu der E-Wertbestimmung wurde auch das Quellverhalten durch Ausmessen von B und $B_Q$ nach einer Einwirkungsdauer unter 10 min. bestimmt. Die Meßergebnisse sind ebenfalls in der Tabelle aufgelistet. Der Q-Wert des Versuchs 8 zeigt, daß Q über 1,1 liegen sollte.

Ultraschall-Schweißversuche wurden mit einem 400W-Schweißgerät bei 20 kHz durchgeführt. Dazu wurden 1 mm dicke Gummischeiben und Streifen aus PECA (Polyestercarbonat) mit den Versuchsproben verschweißt. Diese Proben wurden visuell und mikroskopisch einer gut (+)/schlecht (-)-Bewertung unterworfen.

Tabelle

| Vers. Nr. | Grundbeschichtung | | | Deckbeschichtung | | | | Korrosionsbeständigkeit | | | Ultraschall Schweißversuch | |
|---|---|---|---|---|---|---|---|---|---|---|---|---|
| | Art | Dicke μm | Ankerverbindung | Dicke μm | Extinktion E | Quellung Q | Härtung | DIN 50021 100h | DIN 50021 200h | ges. NaCl+ Ultraschall | mit Gummi | mit Thermoplast |
| 1 | Zn | 0 | 0 | 30 | n.b. | n.b. | IR | neg. | n.b. | neg. | n.b. | n.b. |
| 2 | Zn | 0 | 0 | 20 | n.b. | n.b. | IR | 5 | n.b. | neq. | n.b | n.b. |
| 3 | Zn | 3 | 0 | 40 | n.b. | n.b. | IR | 5 | n.b. | 5 | n.b. | n.b. |
| 4 | Zn | 5 | 0 | 14 | n.b. | n.b. | IR | 4 | 5 | 5 | n.b. | n.b. |
| 5 | Zn | 5 | 0 | 40 | n.b. | n.b. | IR | 5 | n.b. | 5 | n.b. | n.b. |
| 6 | Zn | 12 | 0 | 20 | n.b. | n.b. | IR | 2 | 4 | 4 | - | n.b. |
| 7 | Zn | 12 | 0 | 10 | n.b. | n.b. | IR | 4 | 5 | 5 | - | - |
| 8 | Zn | 5 | Chromat | 20 | 1,02 | <1,1 | IR | 2 | 2 | 2 | - | - |
| 9 | Zn | 5 | Chromat | 20 | 2,30 | 1,1 bis 1,2 | IR | 2 | 3 | 2 | + | + |
| 10 | Zn | 12 | Chromat | 55 | 1,25 | 1,4 bis 1,6 | IR | 1 | 1 | 1 | + | + |
| 11 | Zn | 12 | Chromat | 50 | 2,22 | 1,4 bis 1,5 | IR | 1 | 1 | 1 | + | + |
| 12 | Zn | 12 | Chromat + Vanadat | 80 | 2,45 | 1,5 bis 1,6 | IR | 1 | 1 | 1 | + | + |
| 13 | Zn | 12 | Chromat + Vanadat | 85 | 2,75 | 1,5 bis 1,6 | IR | 1 | 1 | 1 | + | + |
| 14 | Zn | 13 | Chromat + Vanadat | 80 | 3,15 | neg. | IR | 4 | 5 | 3 | neg. | + |
| 15 | Zn | 12 | Chromat + Vanadat | 80 | 3,30 | neg. | IR | 5 | n.b. | neg. | neg. | neg. |
| 16 | Zn | 20 | Molybdat | 125 | 3,10 | neg. | IR | 2 | 5 | 2 | neg. | + |
| 17 | Zn | 20 | Molybdat | 25 | 2,00 | 1,3 bis 1,4 | IR | 1...2 | 2 | 2 | + | + |
| 18 | Zn | 20 | Molybdat | 45 | 0,95 | 1 bis 1,1 | IR | 1 | 1 | 1 | - | - |
| 19 | Zn | 15 | 0 | 50 | 1,95 | 1,2 bis 1,3 | IR | 3 | 5 | 2 | - | + |
| 20 | Zn | 15 | 0 | 50 | 2,10 | 1,3 bis 1,5 | IR | 3 | 5 | 2 | neg | neg. |
| 21 | Zn/Ni | 10 | Chromat | 60 | 2,10 | 1,3 bis 1,4 | IR+UV | 1 | 1 | 1 | + | + |
| 22 | Zn/Ni | 10 | Molybdat | 60 | 2,25 | 1,4 bis 1,5 | IR+UV | 1 | 1 | 1 | + | + |

EP 2 249 972 B1

(fortgesetzt)

| Vers. Nr. | Art | Dicke μm | Ankerverbindung | Dicke μm | Extinktion E | Quellung Q | Härtung | DIN 50021 | | ges. NaCl+ Ultraschall | mit Gummi | mit Thermoplast |
|---|---|---|---|---|---|---|---|---|---|---|---|---|
| | | | | | | | | 100h | 200h | | | |
| 23 | Zn/Ni | 10 | Molybdat | 55 | 0,85 | 1,10 | IR+UV | 1 | 1 | 1 | - | - |
| 24 | Zn | 12 | Chromat | 50 | n.b. | 1,5 bis 1,7 | IR | 1 | 1 | 1 | + | + |
| 25 | Zn | 14 | Chromat | 40 | n.b. | 1,4 bis 1,5 | IR | 1 | 1 | 1 | + | + |
| Berwertung Korrosion: 1: sehr gut 5: Schlecht n.b.: nicht bestimmt neg.: Schichtablösung | | | | | | | | | | | | |

Die Versuche 1 und 2 zeigen, daß eine Deckbeschichtung mit in einer Dicke von 20 oder 30 μm auf Stahl allein keinen ausreichenden Korrosionsschutz ergibt. Auf die Bestimmung weiterer Kennwerte unter diesen Bedingungen wurde daher verzichtet.

Eine Zink-Schicht 3 in Kombination mit einer Deckbeschichtung 4 ohne die Ankerschicht 6 erbringt zwar bereits eine bessere, jedoch noch nicht ausreichende Korrosionsbeständigkeit, wie die Versuche 3 bis 5 zeigen.

Die Verwendung einer Zink-Schicht mit Ankermolekülen als Anker- bzw. Reaktionsschicht 6 bei den Versuchen 9 bis 13, 17, 21, und 22 bringt in Kombination mit E-Werten von etwa 1,2 bis 2,80 durchweg gute bis sehr gute Ergebnisse.

Die Versuche 15 und 16 zeigen, daß bei sonst ausreichender Dicke ein zu hoher löslicher Anteil in der Deckschicht (E = 3,15 bzw. 3,30) bei ansonsten guter Verschweißbarkeit die Korrosionsbeständigkeit nachteilig beeinflußt. Dies läßt sich darauf zurückführen, daß diese Proben in der Deckschicht eine höhere Durchlässigkeit für Wasser aufweisen.

Der Versuch 18 zeigt, daß eine stark gehärtete Lackschicht (E = 0,95) mit einem nur geringen $CHCl_3$-löslichem Anteil eine sehr gute Korrosionsbeständigkeit aufweist, aber nicht schweißbar ist. Eine schlechte Schweißbarkeit bei stark gehärteter Deckschicht mit E-Werten von 0,51 sowie 0,79 zeigen auch die Versuche 7, 8 und 23.

Die Versuche 21 bis 23 zeigen, daß sich durch eine Mischlichtbestrahlung (IR/UV) keine besonderen Vorteile ergeben.

Die Herstellung der erfindungsgemäßen Federschiene sollte insgesamt die folgenden Verfahrensschritte umfassen:

1. Reinigen der Federschiene, vorzugsweise aus einem Profilstahl.

2. Elektrolytisches Abscheiden einer Grundschicht aus Zink.

3. Ausbildung einer Reaktionsschicht im oberflächennahen Bereich der Grundschicht durch Ankermoleküle. Als Ankermoleküle eignen sich Verbindungen der Elemente Chrom, Eisen, Nickel, Vanadium, Titan, Zirkonium, Molybdän und Silizium einzeln oder nebeneinander mit einer Oxidationsstufe von mindestens 3. Vorzugsweise sind dies Lösungen von Chromaten, Vanadaten, Titanaten, Zirkonaten und Molybdaten sowie die dazugehörigen Säuren.

4. Entfernen von überschüssigen bzw. anhaftenden Lösungsresten durch Spülen mit Wasser und Trocknen der Oberfläche.

5. Beschichten der Oberfläche mit einem IR- und/oder UV-härtenden Pulverlack mit einer Schichtdicke von 20 bis 200 μm, vorzugsweise von 30 bis 120 μm (Deckschicht).

6. Härten der Deckschicht durch Einstellen der Bestrahlungsdauer und -intensität, die vorzugsweise so zu wählen sind, daß der in $CHCl_3$ lösliche Anteil bei einer Wellenlänge von 340 nm eine Extinktion im Bereich von 1,2 bis 2,6 ergibt oder daß das Quellmaß Q über 1,1 liegt.

7. Verbinden der beschichteten Federschiene mit einem Wischerblatt.

## Patentansprüche

1. Verfahren zum Herstellen einer beschichteten Federschiene aus Stahl insbesondere für Scheibenwischer mit einem Gummi- oder Elastomerwischerblatt, **dadurch gekennzeichnet, daß** ein Rohling aus Stahl mit einer Zinkschicht als Grundschicht versehen, sodann eine zinkhaltige Ankerschicht durch eine Reaktion des Zinks mit sauerstofffreichen Metallverbindungen einer Oxidationsstufe von mindestens 3 erzeugt sowie auf die Ankerschicht eine Deckschicht aus einem strahlungshärtenden und/oder polymerisierbaren Pulverlack oder einem UV-härtenden Lack oder ein Kunststoff auf Epoxidharzbasis aufgebracht und teilweise gehärtet wird.

2. Verfahren nach Anspruch 1, **dadurch gekennzeichnet, daß** die Deckschicht aus einem Polyester besteht, der mit Acrylester, Polyamid, Polybutylentherephthalat, Polycarbonat, Acrylnitril-Butadien-Styrol, Polyethylentherephthalat, Polypropylen, Polystyrol, Polysulfon oder Polyestercarbonat und Gummi verschweißbar ist.

3. Verfahren nach einem der Ansprüche 1 oder 2, **dadurch gekennzeichnet, daß** die Zinkschicht bis 15% Nickel, Eisen und Kobalt einzeln oder nebeneinander enthält.

4. Verfahren nach einem der Ansprüche 1 bis 3, **dadurch gekennzeichnet, daß** die Ankerschicht 5 bis 20% Sauerstoffverbindungen des Eisens, Nickels, Chroms, Vanadiums, Titans, Zirkoniums, Molybdäns und Siliziums mit einer Oxidationszahl von mindestens 3 einzeln oder nebeneinander enthält.

5. Verfahren nach einem der Ansprüche 1 bis 4, **dadurch gekennzeichnet, daß** die Dicke der Zinkschicht 2 bis 20 μm beträgt.

6. Verfahren nach einem der Ansprüche 1 bis 5, **dadurch gekennzeichnet, daß** die Zinkschicht in einem sauren Bad elektrolytisch aufgebracht wird.

7. Verfahren nach einem der Ansprüche 1 bis 6, **dadurch gekennzeichnet, daß** die Deckschichtdicke auf 20 bis 200 μm eingestellt wird.

8. Verfahren nach einem der Ansprüche 1 bis 7, **dadurch gekennzeichnet, daß** die Dicke der Ankerschicht auf 0,01 bis 0,3 μm eingestellt wird.

9. Verfahren nach einem der Ansprüche 1 bis 8, **dadurch gekennzeichnet, daß** die Ankerschicht durch Tauchen, Walzen oder Besprühen erzeugt wird.

10. Verfahren nach einem der Ansprüche 1 bis 9, **dadurch gekennzeichnet, daß** eine Federschiene aus

   0,40 bis 0,80% Kohlenstoff
   0,15 bis 1,80% Silizium
   0,40 bis 1,80% Mangan
   0,01 bis 2% Chrom
   0,001 bis 2% Vanadium

   Rest Eisen einschließlich erschmelzungsbedingter Verunreinigungen beschichtet wird.

11. Verfahren nach einem der Ansprüche 1 bis 10, **dadurch gekennzeichnet, daß** die unbeschichtete Federschiene 3 bis 30 sec. bei 200 bis 400°C geglüht wird.

12. Verfahren nach einem der Ansprüche 1 bis 11, **dadurch gekennzeichnet, daß** die beschichtete Federschiene formschlüssig und punktuell mit einem Wischerblatt durch Ultraschall oder Vibrationsschweißen verbunden wird.

13. Verfahren nach einem der Ansprüche 1 bis 12, **dadurch gekennzeichnet, daß** die Zinkschicht in einer Dicke von 3 bis 8 μm aufgebracht wird.

14. Verfahren nach einem der Ansprüche 1 bis 13, **dadurch gekennzeichnet, daß** in die Deckschicht einzeln oder nebeneinander Teilchen, Pigmente und Mikroblasen eingebracht werden.

15. Verfahren nach einem der Ansprüche 1 bis 14, **dadurch gekennzeichnet, daß** die beschichtete Federschiene mit einem Wischerblatt aus Gummi durch Ultraschall mit einer Frequenz von 20 bis 60 kHz verschweißt wird.

16. Verfahren nach einem der Ansprüche 1 bis 15, **dadurch gekennzeichnet, daß** die beschichtete Federschiene mit einem Wischerblatt aus Gummi durch Vibrationsschweißen mit Schwingungen von 200 bis 800 Hz verschweißt wird.

## Claims

1. Method for producing a coated spring strip made of steel, in particular for windscreen wipers with a rubber or elastomer wiper blade, **characterised in that** a steel blank is provided with a zinc layer as base layer, a zinc-containing anchoring layer is then formed by reacting the zinc with oxygen-rich metal compounds with an oxidation state of at least 3, and also a covering layer of a radiation-curing and/or polymerisable powder lacquer or a UV-curing lacquer or an epoxide-based plastic is applied to the anchoring layer and is partially cured.

2. Method according to claim 1, **characterised in that** the covering layer consists of a polyester that can be welded to acrylic ester, polyamide, polybutylene terephthalate, polycarbonate, acrylonitrile-butadiene-styrene, polyethylene terephthalate, polypropylene, polystyrene, polysulfone or polyester carbonate and rubber.

3. Method according to one of claims 1 and 2, **characterised in that** the zinc layer contains up to 15% nickel, iron and cobalt individually or in combination.

4. Method according to any one of claims 1 to 3, **characterised in that** the anchoring layer contains 5 to 20% of oxygen compounds of iron, nickel, chromium, vanadium, titanium, zirconium, molybdenum and silicon with an oxidation state of at least 3, individually or in combination.

5. Method according to any one of claims 1 to 4, **characterised in that** the thickness of the zinc layer is 2 to 20 µm.

6. Method according to any one of claims 1 to 5, **characterised in that** the zinc layer is applied by electrolysis in an acid bath.

7. Method according to any one of claims 1 to 6, **characterised in that** the covering layer thickness is adjusted to 20 to 200 µm.

8. Method according to any one of claims 1 to 7, **characterised in that** the thickness of the anchoring layer is adjusted to 0.01 to 0.3 µm.

9. Method according to any one of claims 1 to 8, **characterised in that** the anchoring layer is produced by immersion, rolling or spraying.

10. Method according to any one of claims 1 to 9, **characterised in that** a spring strip of

| | |
|---|---|
| 0.40 to 0.80% | carbon |
| 0.15 to 1.80% | silicon |
| 0.40 to 1.80% | manganese |
| 0.01 to 2% | chromium |
| 0.001 to 2% | vanadium |

remainder iron including impurities produced by smelting, is coated.

11. Method according to any one of claims 1 to 10, **characterised in that** the uncoated spring strip is annealed for 3 to 30 seconds at 200 to 400°C.

12. Method according to any one of claims 1 to 11, **characterised in that** the coated spring strip is joined by positive engagement and in a localised manner to a wiper blade by ultrasound or vibration welding.

13. Method according to any one of claims 1 to 12, **characterised in that** the zinc layer is applied in a thickness of 3 to 8 µm.

14. Method according to any one of claims 1 to 13, **characterised in that** particles, pigments and microbubbles are incorporated individually or in combination in the covering layer.

15. Method according to any one of claims 1 to 14, **characterised in that** the coated spring strip is welded to a wiper blade of rubber by ultrasound welding at a frequency of 20 to 60 kHz.

16. Method according to any one of claims 1 to 15, **characterised in that** the coated spring strip is welded to a wiper blade of rubber by vibration welding with vibrations of 200 to 800 Hz.

**Revendications**

1. Procédé de fabrication d'une lame flexible revêtue en acier, en particulier pour des essuie-glaces dotés d'un balai d'essuie-glace en caoutchouc ou en élastomère, **caractérisé en ce qu'**une pièce brute en acier est pourvue d'une couche de zinc comme couche de base, puis une couche d'ancrage contenant du zinc est produite par une réaction du zinc avec des composés métalliques riches en oxygène présentant un degré d'oxydation d'au moins 3, et une couche supérieure composée d'une laque en poudre durcissant par rayonnement et/ou polymérisable ou d'une laque durcissant aux UV ou d'une matière plastique à base de résine époxy est appliquée sur la couche d'ancrage et partiellement durcie.

2. Procédé selon la revendication 1, **caractérisé en ce que** la couche supérieure est composée d'un polyester qui peut être soudé avec un ester acrylique, du polyamide, du polytéréphtalate de butylène, du polycarbonate, de l'acrylonitrile butadiène styrène, du polytéréphtalate d'éthylène, du polypropylène, du polystyrène, du polysulfone ou du polyester carbonate et du caoutchouc.

3. Procédé selon l'une des revendications 1 ou 2, **caractérisé en ce que** la couche de zinc contient jusqu'à 15 % de nickel, de fer et de cobalt individuellement ou côte à côte.

4. Procédé selon l'une des revendications 1 à 3, **caractérisé en ce que** la couche d'ancrage contient de 5 à 20 % de composés oxygénés du fer, du nickel, du chrome, du vanadium, du titane, du zirconium, du molybdène et du silicium présentant un nombre d'oxydation d'au moins 3 individuellement ou côte à côte.

5. Procédé selon l'une des revendications 1 à 4, **caractérisé en ce que** l'épaisseur de la couche de zinc est de 2 à 20 $\mu$m.

6. Procédé selon l'une des revendications 1 à 5, **caractérisé en ce que** la couche de zinc est appliquée par électrolyse dans un bain acide.

7. Procédé selon l'une des revendications 1 à 6, **caractérisé en ce que** l'épaisseur de la couche supérieure est réglée entre 20 et 200 $\mu$m.

8. Procédé selon l'une des revendications 1 à 7, **caractérisé en ce que** l'épaisseur de la couche d'ancrage est réglée entre 0,01 et 0,3 $\mu$m.

9. Procédé selon l'une des revendications 1 à 8, **caractérisé en ce que** la couche d'ancrage est produite par immersion, laminage ou projection.

10. Procédé selon l'une des revendications 1 à 9, **caractérisé en ce qu'**une lame flexible est revêtue de

    0,40 à 0,80 % de carbone,
    0,15 à 1,80 % de silicium,
    0,40 à 1,80 % de manganèse,
    0,01 à 2 % de chrome,
    0,001 à 2 % de vanadium,

    le reste étant du fer, y compris des impuretés dues à la fusion.

11. Procédé selon l'une des revendications 1 à 10, **caractérisé en ce que** la lame flexible non revêtue est recuite de 3 à 30 sec. entre 200 et 400 °C.

12. Procédé selon l'une des revendications 1 à 11, **caractérisé en ce que** la lame flexible revêtue est reliée à un balai d'essuie-glace par complémentarité de forme et ponctuellement par soudage par ultrasons ou par vibration.

13. Procédé selon l'une des revendications 1 à 12, **caractérisé en ce que** la couche de zinc est appliquée en une épaisseur de 3 à 8 $\mu$m.

14. Procédé selon l'une des revendications 1 à 13, **caractérisé en ce que** des particules, des pigments et des microbulles sont introduites individuellement ou côte à côte dans la couche supérieure.

15. Procédé selon l'une des revendications 1 à 14, **caractérisé en ce que** la lame flexible revêtue est soudée avec un balai d'essuie-glace en caoutchouc par ultrasons à une fréquence de 20 à 60 kHz.

16. Procédé selon l'une des revendications 1 à 15, **caractérisé en ce que** la lame flexible revêtue est soudée avec un balai d'essuie-glace en caoutchouc par soudage par vibration à des vibrations de 200 à 800 Hz.

2     1

4, 5, 6

3

1

Fig. 1

Fig. 2

Fig. 3

Fig. 4

Fig. 5

Fig. 6

Fig. 7

**IN DER BESCHREIBUNG AUFGEFÜHRTE DOKUMENTE**

**In der Beschreibung aufgeführte Patentdokumente**

- DE 2153809
- DE 10333082 A1
- WO 0158732 A1